Europäisches Patentamt

European Patent Office

Office européen des brevets

(11) Publication number: **0 043 709**
**A2**

(12) **EUROPEAN PATENT APPLICATION**

(21) Application number: **81303031.9**

(22) Date of filing: **02.07.81**

(51) Int. Cl.³: **B 60 K 31/00, B 60 K 28/00**

(30) Priority: **03.07.80 ZA 804011**

(43) Date of publication of application: **13.01.82**
**Bulletin 82/2**

(84) Designated Contracting States: **AT BE CH DE FR GB IT LI LU NL SE**

(71) Applicant: **KILOKING (PROPRIETARY) LIMITED, 24th Floor, Kine Centre Commissioner Street, Johannesburg Transvaal (ZA)**

(72) Inventor: **Henderson, Henning Morgan, No. 2 Clubview Corner Nigel and Hills Road, Selection Park Springs Transvaal (ZA)**

(74) Representative: **Haigh, Charles Roy et al, J.A. KEMP & CO. 14 South Square Gray's Inn, London WC1R 5EU (GB)**

(54) A vehicle and a control device for controlling the operation of a vehicle.

(57) A vehicle 10 having a drive engine 11, a fuel injection pump 34 for supplying fuel to the engine at a variable rate, an accelerator pedal 33 for controlling the rate of fuel supplied to the engine, and sensing means 14, 16, 18, 20, and 22 for sensing various vehicle parameters, comprises a collapsible link 30 connected in the connection 32 between the accelerator pedal 33 and the injector pump 34. The collapsible link 30 has an electro-magnetically operated latch for restraining collapsing of the collapsible link 30 under normal conditions. Upon the occurrence of an abnormal or undesirable condition, such as, for example, excessive accelerator pedal depression, the latch will be operative in response to the various sensors to cause the collapsible link 30 to collapse, thereby reducing the maximum amount of power available to the driver.

DESCRIPTION

TITLE: A VEHICLE AND A CONTROL DEVICE FOR CONTROLLING THE
OPERATION OF A VEHICLE

THIS INVENTION relates to a vehicle. It also relates to a control device for controlling the operation of a vehicle.

According to the invention there is provided a vehicle having a drive engine, fuel supply means for supplying fuel at a variable rate to the engine, and a driver operable control connected to the fuel supply means for controlling said rate, wherein the driver operable control is connected to the fuel supply means via a collapsible connection having controlled restraining means for selectively restraining collapsing of the connection.

Further according to the invention there is provided a vehicle having a drive engine, fuel supply means for supplying fuel at a variable rate to the engine, a driver operable control connected to the fuel supply means for controlling said rate, and sensing means for sensing a predetermined vehicle parameter, wherein the driver operable control is connected to the fuel supply means via a collapsible connection having restraining means, the restraining means being responsive to the sensing means selectively to restrain collapsing of the connection depending on the state of the parameter.

The parameter may be the rate at which fuel is supplied to the engine. The parameter could also be the first derivitive with respect to time of said rate.

The invention extends to a vehicle control device for controlling the operation of a vehicle having a drive engine, fuel supply means for supplying fuel at a variable rate to the engine, and a driver operable control connected via a connection to the fuel supply means for controlling said rate, the control device comprising sensing means for sensing a predetermined vehicle parameter, a collapsible link insertable in said connection, and restraining means responsive to the sensing means selectively to restrain collapsing of the collapsible link depending on the state of the parameter.

The collapsible link may comprise a lost motion linkage. The degree of lost motion of the lost motion linkage maybe adjustable.

The lost motion linkage may comprise an outer member having corresponding first connection formations at opposite ends thereof, an inner member longitudinally slideable with respect to the outer member between limits and having corresponding second connection formations at opposite ends thereof, and a pair of connectors, one of the connectors being engageable with either one of said first connection formations, and the other one of the connectors being engageable with either one of said second connection formations.

The restraining means may be electrically operable.

The invention will now be described in more detail, by way of example, with reference to the accompanying drawings.

In the drawings:

Figure 1 is a diagrammatic side view of the front part of a heavy duty road vehicle, having a control device in accordance with the invention installed therein;

Figure 2 shows schematically the connection of various parts of the control device to various parts of the vehicle;

Figure 3 is a longitudinal section of a collapsible link forming part of the control device, shown assembled to operate in the 'push' mode;

Figure 4 is a longitudinal section of the collapsible link shown assembled to operate in the 'pull' mode;

Figure 5 is a block diagram illustrating one aspect of the operation of the control device; and

Figure 6 shows two of the collapsible links connected in series in the connection between the vehicle's accelerator pedal and its fuel injector pump.

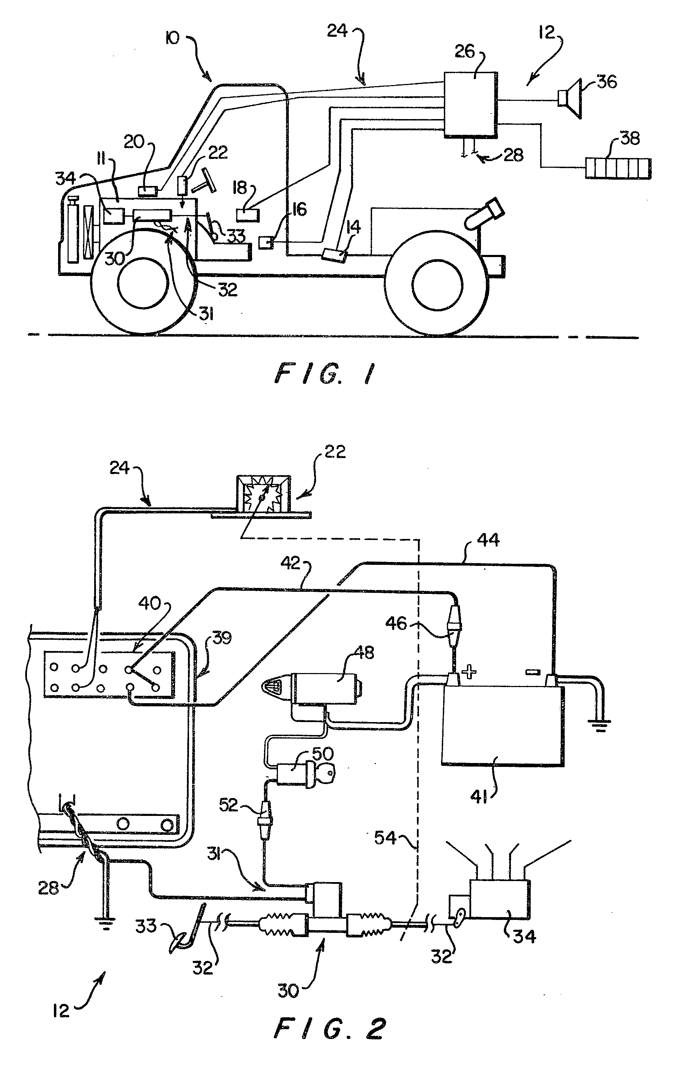

Referring first to Figure 1, reference numeral 10 generally indicates the mechanical horse part of a heavy duty road vehicle having a control device 12 installed therein. The control device 12 includes sensing means in the form of various sensors 14, 16, 18, 20, and 22 connected by means of wiring 24 to circuitry 26. The circuitry 26 has output conductors 28. The device 12 further has a collapsible link 30 with a pair of wires 31 leading to it, the link 30 being inserted in a connection 32 connecting a driver operable control in the form of the vehicle's accelerator pedal 33 to fuel supply means in the form of the vehicle's fuel injector pump 34. In the case of a petrol driven vehicle, the fuel supply means would be in the form of a carburettor. The circuitry 26 also has an output to a loudspeaker 36 and to an electro-mechanical counter 38.

The sensor 22 (arranged to sense displacement of the connection 32), the loudspeaker 36 and the counter 38 may be substantially as described in the specification of ~~South~~ European Patent Application 78300292.6 ~~African patent 77/4986~~. In summary, that specification describes a device which senses the rate of fuel supplied to a vehicle engine by sensing the accelerator pedal depression, senses the inclination of the vehicle to the horizontal in the direction of forward travel, and provides, by means of the loudspeaker 36, a warning 'bleep' when the accelerator pedal is depressed beyond a predetermined degree, said predetermined degree being an increasing function of the sensed inclination of the vehicle. If the driver does not heed the warning 'bleep' by easing off on the accelerator pedal within a predetermined time period, then a count is recorded on the counter 38.

Referring now to Figure 2, the circuitry 26, the loudspeaker 36, and the counter 38 are housed in a box 39 having terminals 40 for connection to the various sensors and to a power supply. The circuitry 26 is connected to the vehicle's battery 41 via conductors 42 and 44, and a fuse 46. Reference numeral 48 indicates the vehicle's starter motor, and reference numeral 50 the ignition switch.

The device is installed by cutting away a portion of the connection 32 and inserting the collapsible link 30 in place of the cut-away portion, by connecting one of the leads 31 via a fuse 52 and the ignition switch 50 to the positive terminal of the battery 41, and by connecting the other lead 31 to one of the leads 28. The other lead 28 is connected to earth, the electrical system of the vehicle being of the negative-to-earth type.

The sensor 22, instead of comprising a number of cam-operated switches as described in the earlier specification referred to above, comprises a rheostat, the wiper arm of which is connected mechanically to the connection 32 at a point between the collapsible link 30 and the injector pump 34, as indicated schematically by dotted line 54. The rheostat is connected electrically to provide a voltage on its wiper terminal which is proportional to the displacement of that part of the connection 32 to which it is connected. By use of suitable gates, the rheostat can fulfil the same function as the cam operated switches referred to earlier.

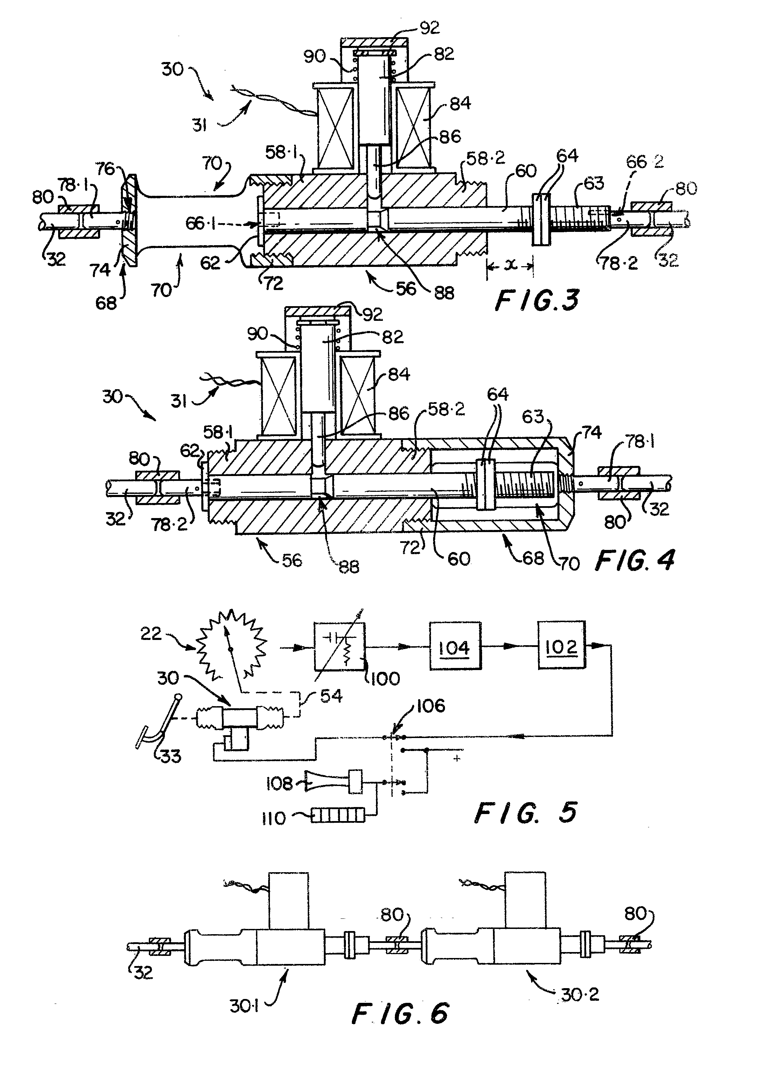

Referring now to Figure 3, the collapsible link 30 comprises an outer part 56 having screw threaded ends 58.1 and 58.2, and a rod-shaped inner part 60 which is slidable in a bore in the outer part 56. At its one end, the inner part has a head 62 and at the other end a screw threaded portion 63 with which two lock-nuts 64 are engaged. In the ends of the inner part 60 there are screw-threaded bores 66.1 and 66.2 respectively. The collapsible link 30 further comprises a hollow extension 68 which has lateral openings 70, a screw-threaded socket portion 72 at one end whereby it engages with the screw-threaded end 58.1, and an end portion 74 having a screw-threaded bore 76. (In Figure 4 the hollow part 68 is shown rotated through 90°). In the screw-threaded bore 76 there is screwed a short length of rod 78.1, and in the screw-threaded bore 66.2 a short length of rod 78.2. The rods 78.1 and 78.2 have the same diameter as the connection 32 and are secured thereto by clamps 80.

On one side of the outer part 56 there is a plunger 82 and a solenoid coil 84 for operating the plunger. The plunger 82 has a part 86 which extends through the wall of the outer part 56 and can engage with an annular groove 88 in the inner part 60. The plunger has a return spring 90 and an end stop 92. When the coil 84 is energised, the plunger 82 is pulled in and the part 86 engages with the groove 88 in the inner part 66 to latch the parts 56 and 60 against movement relative to one another, or, in other words restraining the collapsible link from collapsing.

The assembly shown in Figure 3 is for an injector pump of the "push" type where a compressive force is required in the connection 32 to increase the fuel supply to the engine. If the solenoid 84 is energised, there will be no lost motion in the collapsible link and operation of the injector pump 34 by the accelerator pedal 33 will be normal. If, however, the solenoid coil 84 is de-energised, then the link 30 will collapse in the sense that the inner part 60 will slide relative to the outer part 56 until the lock nuts 64 abut against the end 58.2. The degree of lost motion is the distance x  indicated in the drawing and this can be adjusted by adjusting the lock nuts 64.

To convert the collapsible link 30 for use with a 'pull' type injector pump, the rod 78.2 and the hollow extension 68 are unscrewed, the rod 78.2 then screwed into the screw threaded bore 66.1, and the extension 68 (with the rod 78.1) screwed onto the screw threaded end 58.2.  The assembly will then be as shown in Figure 4.

The operation of the device will be as follows.

Should the driver depress his accelerator pedal further than permitted, a warning 'bleep' will issue from the loudspeaker 36 as described in detail in the earlier specification referred to above.  If the driver does not heed the warning by easing off on the accelerator pedal within a predermined time period, a count will be recorded on the counter 38 and, simultaneously, the solenoid 84 will be de-energised.  This will cause the link 30 to collapse, becoming effectively shorter by the distance x, so that the rate of fuel supplied to the engine will decrease. As will be described with reference to Figure 5, there may be a timer which will keep the solenoid 84 de-energised for a predetermined, adjustable, time period.  For the whole of this time period, the driver will have available only part of the maximum power of the engine as a result of collapsing of the collapsible link. At the end of this period he will have to release the accelerator pedal fully before the plunger 82 will relatch with the part 60. A relatively weak return spring (not shown) may be provided to return the outer and inner parts 56 and 60 to the latch position as shown in Figures 3 and 4.

Referring now to Figure 5, there is shown an arrangement whereby the collapsible link 30 can be caused to operate when the driver of the vehicle depresses the accelerator pedal 33 at too fast a rate. This is done by passing the voltage output of the rheostat 22 through a differentiator 100, the output of the differentiator 100 being fed to a timer device 102 via a trigger device 104. The output of the timer device 102 is fed via an override switch 106 to the solenoid of the collapsible link 30. The construction of the parts 100, 102 and 104 is well within the capabilities of those skilled in the art and is therefore not described in detail.

The voltage on the output of the differentiator 100 will be proportional to the rate at which the accelerator pedal 33 is depressed. The trigger circuit 104 will ensure that the timer 102 is not triggered as a result of vibrations of the accelerator pedal 33. This may occur on bumpy roads and should not, of course, cause collapsing of the collapsible link 30. Should the driver of the vehicle depress the accelerator pedal 33 at more than a predetermined rate, the trigger 104 will trigger the timer 102 and cause collapsing of the collapsible link 30. Thereafter, the driver will only have available part of the power of the vehicle's engine, for the timing period of the timer 102. The driver may, in cases of emergency, operate the override switch 106 so as to energise the solenoid coil of the collapsible link 30 if it would otherwise be de-energised, but in doing so, a siren 108 will automatically come into operation, causing discomfort to the driver. Also, a count is recorded on a counter 110 whenever the override switch 106 is operated. The discomfort caused by the siren 108 and the record made of the number of times that the override switch 106 is used, will discourage the driver from using the override switch unnecessarily.

Referring now to Figure 6, there is shown an arrangement wherein two collapsible links, indicated by reference numerals 30.1 and 30.2, are connected in series in the connection 32. The collapsible link 30.1 may be operative to reduce the maximum available output power of the vehicle engine by, say, about 15% in the case of, as described above, an excessive degree of accelerator depression or an excessive rate of accelerator pedal depression. In addition, the collapsible link 30.1 may be operative upon the following occurrences as sensed by the various sensors referred to above, namely: excessive cornering, excessive breaking, excessive engine speed, excessive engine torque in relation to engine speed, etc. The collapsible link 30.2 may be arranged to have a sufficiently large amount of lost motion so that if de-energised the engine speed will return to idling speed, irrespective of the position of the accelerator pedal 33. The solenoid coil of the collapsible link 30.2 may, for example, be de-energised upon the occurrence of the following, namely: loss of oil pressure, loss of cooling water pressure, excessive clutch housing temperature, excessive brake drum temperature, excessive bearing temperatures, and the like.

12    0043709

CLAIMS

1.      A vehicle having a drive engine, fuel supply means
for supplying fuel at a variable rate to the engine and a
driver operable control connected to the fuel supply means for
controlling said rate, characterised therein that the driver
operable control is connected to the fuel supply means via a
collapsible connection having controlled restraining means for
selectively restraining collapsing of the connection.

2.      A vehicle having a drive engine, fuel supply means
for supplying fuel at a variable rate to the engine, a driver
operable control connected to the fuel supply means for
controlling said rate, and sensing means for sensing a predetermined vehicle parameter, characterised therein that the
driver operable control is connected to the fuel supply means
via a collapsible connection having restraining means, the
restraining means being responsive to the sensing means
selectively to restrain collapsing of the connection depending
on the state of the parameter.

3.      A vehicle as claimed in claim 2, characterised
therein that the parameter is said rate.

4.      A vehicle as claimed in claim 2, characterised
therein that the parameter is the first derivative with respect
to time of said rate.

5.      A vehicle as claimed in any one of the preceding claims, characterised therein that the collapsible connection comprises a lost motion linkage.

6.      A vehicle as claimed in claim 5, characterised therein that the degree of lost motion of the lost motion linkage is adjustable.

7.      A vehicle control device for controlling the operation of a vehicle having a drive engine, fuel supply means for supplying fuel at a variable rate to the engine, and a driver operable control connected via a connection to the fuel supply means for controlling said rate, the control device comprising sensing means for sensing a predetermined vehicle parameter,  and being characterised therein that it further comprises a collapsible link insertable in said connection, and restraining means responsive to the sensing means selectively to restrain collapsing of the collapsible link depending on the state of the parameter.

8.      A vehicle control device as claimed in claim 7, characterised therein that the collapsible link comprises a lost motion linkage.

9.      A vehicle control device as claimed in claim 8, characterised therein that the degree of lost motion of the lost motion linkage is adjustable.

10.      A vehicle control device as claimed in claim 8 or claim 9, characterised therein that the lost motion linkage comprises an outer member having corresponding first connection formations at opposite ends thereof, an inner member longitudinally slideable with respect to the outer member between limits and having corresponding second connection formations at opposite ends thereof, and a pair of connectors, one of the connectors being engageable with either one of said first connection formations, and the other one of the connectors being engageable with either one of said second connection formations.

11.     A vehicle control device as claimed in any one of claims 7 to 10, characterised therein that the restraining means is electrically operable.

FIG. 1

FIG. 2

0043709

FIG.3

FIG.4

FIG. 5

FIG.6